# FASCICULE DE BREVET EUROPEEN

(11) **EP 0 421 064 B1**
(45) Date de publication et mention de la délivrance du brevet: **16.03.1994**
(21) Numéro de dépôt: 90113521.0
(22) Date de dépôt: 14.07.1990
(51) Int. Cl.: G01B 7/00, G01B 3/00, G01B 5/00

(54) **Palpeur électronique de mesure de grandeurs linéaires**
Elektronischer Messaufnehmer von linearen Grössen
Electronic linear dimension measuring gauge

(30) Priorité: 01.09.1989 CH 3176/89
(43) Date de publication de la demande: 10.04.1991
(73) Titulaire: TESA S.A., 1020 Renens (CH)
(72) Inventeur: Zanier, Adriano, CH-1008 Prilly (CH); Lendi, Jürg, CH-1010 Lausanne (CH)
(74) Mandataire: Misrachi, Alfred

(56) Documents cités:
- EP-A- 0 120 377
- WO-A-87/01797
- US-A- 3 192 635
- US-A- 3 936 945
- PATENT ABSTRACTS OF JAPAN, vol. 8, no. 282 (P-323)[1719], 22 décembre 1984; & JP-A-59 147 209

## Description

La présente invention a pour objet un palpeur électronique de mesure de grandeurs linéaires utilisé notamment pour le contrôle dimensionnel des conformations géométriques de pièces mécaniques en atelier de fabrication.

Ce palpeur est du type comprenant un corps destiné à être fixé dans un support de mesure, une tige de mesure mobile axialement dans le corps dans la direction de la mesure sur une course limitée par un système de butées de fins de courses réglable comprenant une pièce d'appui solidaire de la tige, une butée de fin de course associée au corps destinée à limiter la course de mesure et un ressort entre la tige et le corps pour produire une pression de mesure, une touche de mesure fixée au bout de la tige à l'extérieur du corps, un transducteur électronique dans le corps sensible aux déplacements axiaux de la tige et apte à produire un signal électrique représentatif de la grandeur algébrique desdits déplacements par rapport à un zéro électrique préréglé, et des moyens de réglage du positionnement de la touche de mesure par rapport au zéro électrique.

Dans les palpeurs connus de ce type, le réglage du positionnement de la touche de mesure par rapport au zéro électrique est obtenu par déplacement d'au moins une butée du système de butées de réglage de la course de mesure par vissage ou dévissage dans le corps d'au moins un élément de ce système, à l'aide d'un outil approprié.

Le contrôle du positionnement choisi de la touche de mesure par rapport au zéro électrique se fait par lecture de sa valeur, sur un appareil indicateur électronique de mesure analogique ou digital relié à la sortie du transducteur électronique du palpeur, ou bien éventuellement par répétition manuelle du nombre de tours de vissage ou de dévissage de l'élément déplacé, mémorisé par l'opérateur, ce dernier mode opératoire étant toutefois difficile à maîtriser.

Ce processus de réglage du positionnement de la touche de mesure par rapport au zéro électrique est lent par l'opération de vissage ou de dévissage qu'il implique, et délicat par la nécessité du contrôle de position obtenu soit par lecture de sa valeur soit par mémorisation de l'opérateur.

Le document EP-A-0120377 décrit un capteur de déplacement relatif entre un élément producteur de vapeur d'un reacteur nucléaire et la fondation du bâtiment de ce reacteur. Ce capteur comporte un corps fixé à la fondation et dans lequel une pointe de mesure est poussée par un ressort contre l'élément précité. La pointe de mesure se compose d'un poussoir à l'extrémité duquel est fixée une tête de mesure. A l'intérieur du poussoir et dans sa partie tubulaire supérieure est située une bobine. Egalement à l'intérieur du poussoir, une tige est reliée, en haut, à un noyau situé au niveau de la bobine, et en bas, à une touche de mesure portant intérieurement un aimant permanent auquel s'appuie la tige par l'intermédiaire d'une plaque portant un ancrage tubulaire placé en regard d'une bobine enfilée dans la tête de mesure à l'extrémité libre du poussoir. Ainsi, la touche de mesure est directement reliée au noyau situé au niveau de la bobine placée dans la partie supérieure du poussoir, et le déplacement de la touche de mesure est commandé à distance par excitation de la bobine de la tête de mesure en vue du calibrage du capteur. Une première butée limite les déplacements du poussoir dans le corps, et une deuxième butée, constituée par l'extrémité libre du poussoir, limite le déplacement de la touche de mesure dans la tête de mesure.

Le document WO-A-8701797 décrit une fixation du type à baïonnette d'une pièce de mesure sur la tête de mesure d'un micromètre de mesure d'intérieurs. Différentes positions du zéro de l'appareil peuvent être définies par des pièces de mesure de longueurs différentes.

Le document US-A-3192635 décrit un réglage du positionnement de la touche de mesure d'une jauge à cadran indicateur dans lequel la touche est montée déplaçable dans une douille sous l'action d'un écrou engagé dans une partie filetée de la touche pour définir la course de mesure utile, cependant que la douille est elle-même soumise à un sytème de déplacement comprenant une rainure périphérique hélicoïdale engagée dans un doigt de blocage vissé dans le corps de l'instrument.

L'invention a pour but de rendre plus rapide et plus simple le processus de réglage du positionnement de la touche de mesure du palpeur par rapport au zéro électrique, et ceci par des structures plus simples, moins onéreuses et de plus faible encombrement.

A cet effet, le palpeur selon l'invention est caractérisé en ce que le corps et la tige de mesure comportent des moyens d'interpénétration locale présentant au moins un étage d'appui de hauteur prédéterminée dans la direction des déplacements de la tige, disposés entre la pièce d'appui de la tige et la butée associée au corps, ces moyens étant maintenus en appui par un ressort (8, 30), l'interpénétration dans l'étage d'appui étant localisée par poussée manuelle à l'encontre du ressort et rotation de la tige autour de son axe longitudinal, et ensuite obtenue et assurée par relâchement, à la manière des liaisons dites "à baïonnette".

De la sorte, le réglage du positionnement choisi de la touche de mesure par rapport au zéro électrique est obtenu par l'interpénétration des moyens prévus à cet effet, ce positionnement étant défini par la hauteur de l'étage d'appui, et ceci de manière rapide et simple par manipulation de la tige par la touche de mesure, sans nécessiter de vissage à l'aide d'un outil approprié et sans nécessiter de contrôle de la valeur de l'écart entre la position obtenue et le zéro électrique.

Le nombre d'étages d'appui définissant ce positionnement de la touche de mesure par rapport au zéro électrique peut être supérieur à l'unité et choisi chaque fois en fonction de variables telles que la forme de la pièce à contrôler, la forme de la touche de mesure, ainsi que la grandeur des tolérances des cotes à contrôler, comme par exemple pour le contrôle de séries de pièces différentes à l'aide d'un même palpeur, chaque étage d'appui étant adapté à une fourchette de ces grandeurs.

Il est possible de définir un étage d'appui correspondant à une faible course d'engagement de la touche de mesure avec la pièce à contrôler, par exemple pour éviter tout risque de casse dans le cas d'un engagement en glissade, latéralement par rapport au déplacement axial de la tige du palpeur, lorsque l'opérateur ne veut pas utiliser un système de relevage du palpeur avant d'engager la pièce à mesurer de cette manière.

Dans une première forme d'exécution selon ce concept de base, le palpeur comporte une butée intercalaire mobile disposée entre la pièce d'appui de la tige de mesure et la butée de fin de course associée au corps, un ressort pour pousser cette butée intercalaire contre la butée de fin de course, et ces deux butées comportent des moyens d'interpénétration constitués par un doigt en saillie sur une face de l'une d'elles et une encoche correspondante sur la face en regard de l'autre, de hauteur choisie.

Dans une seconde forme d'exécution de structures encore plus simples, le palpeur comporte une butée intercalaire fixée au corps entre la pièce d'appui de la tige et la butée de fin de course associée au corps, des moyens d'interpénétration constitués par une encoche de la butée intercalaire, de hauteur choisie, dans laquelle la pièce d'appui de la tige de mesure est destinée à coulisser, et une rondelle pressée contre la butée intercalaire par un ressort et destinée à s'opposer élastiquement au dégagement de la pièce d'appui de la tige de mesure hors de l'encoche de la butée intercalaire, la pièce d'appui de la tige de mesure étant par ailleurs pressée contre la butée intercalaire par le ressort destiné à produire la pression de mesure.

Dans ces deux formes d'exécution, lorsque deux positions ou plus de la touche de mesure par rapport au zéro électrique du palpeur sont désirées, un nombre correspondant d'encoches de hauteurs différentes peut être prévu, ces encoches étant espacées angulairement sur les éléments qui les présentent.

Le dessin anenxé représente, à titre d'exemple, deux formes d'exécution de l'objet de l'invention.

La figure 1 est une vue d'ensemble en deux demi-coupes axiales correspondant à deux positions différentes des éléments mobiles de la première forme d'exécution.

La figure 2 est une vue en perspective d'un détail de la figure 1.

La figure 3 est une vue d'ensemble partielle en coupe axiale de la seconde forme d'exécution.

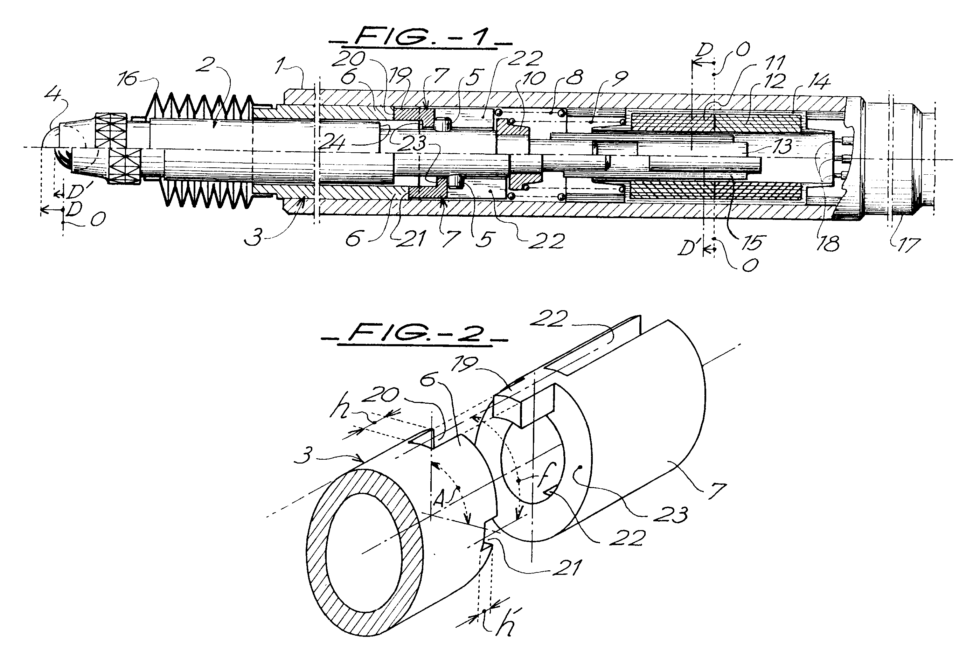

Le palpeur représenté figures 1 et 2 dans sa première forme d'exécution est du type cylindrique à éléments coaxiaux dont le corps 1 est destiné à être fixé dans un support de mesure, non représenté, utilisé de manière usuelle pour le contrôle dimensionnel de pièces mécaniques et qui permet de le mettre en contact avec une pièce à mesurer et de l'en écarter à volonté, tel que par exemple un support pneumatique.

Ce palpeur comporte :
- une tige de mesure 2 mobile axialement dans le corps 1 dans la direction de la mesure,
- un palier 3 de guidage des déplacements de la tige de mesure 2 solidaire du corps 1,
- une touche de mesure 4 fixée au bout de la tige de mesure 2 à l'extérieur du corps 1,
- un système réglable de butées de fins de courses des déplacements de la tige de mesure 2 dans le corps 1 comprenant une pièce d'appui 5 solidaire de cette tige et constituée ici par une goupille à traverser constituant également un guidage antirotation, une butée de fin de course associée au corps 1 et qui est ici constituée par l'extrémité intérieure 6 du palier 3, une butée intercalaire mobile 7 disposée entre la pièce d'appui 5 et la butée 6, et un ressort de poussée 8 pour pousser cette butée intercalaire 7 contre la butée de fin de course 6; la butée intercalaire 7 et la butée 6 sont détaillées sur la figure 2 et décrites plus loin,
- un ressort 9 entre la tige de mesure 2 et le corps 1, prenant ici appui sur la tige 2 par l'intermédiaire d'un manchon 10, pour produire une pression de mesure de la touche 4 contre les pièces à mesurer,
- un transducteur électronique de mesure 11-12-13 dans le corps 1 sensible aux déplacements axiaux de la tige de mesure 2 et apte à produire un signal électrique représentatif de la grandeur algébrique desdits déplacements par rapport a un zéro (0) préréglé. Ce transducteur est ici, à titre d'exemple, du type inductif comprenant deux bobines 11 et 12 maintenues dans un support isolant 14 fixé dans le corps 1, et un noyau de ferrite 13 maintenu dans un tube isolant 15 fixé au bout de la tige de mesure 2, à l'opposé de la touche de mesure 4, et dans lequel le noyau de ferrite 13 influence l'impédance des bobines 11 et 12 par ses changements de position pour produire le signal électrique de mesure,
- un soufflet de protection 16 de la tige 2 contre les agents extérieurs, entre la touche de mesure 4 et le corps 1,
- et un manchon souple de raccordement 17, représenté partiellement, par lequel les conducteurs électriques de sorties 18 du transducteur électronique sont reliés à un câble destiné à leur liaison avec un appareil indicateur de type usuel accordé au transducteur.

Dans cette structure d'ensemble, la butée intercalaire 7 et l'extrémité intérieure 6 du palier 3 de guidage de la tige de mesure 2, détaillées figure 2, sont des éléments cylindriques comportant des moyens d'interpénétration locale à deux étages d'appui de hauteurs h et h' différentes dans la direction des déplacements axiaux de la tige de mesure 2, et qui sont ici constitués par :
- un doigt d'appui 19 en saillie sur la face de la butée intercalaire 7 située en regard de l'extrémité 6 du palier 3,
- une première encoche 20 de hauteur h dans l'extrémité 6 de la paroi du palier 3 destinée à être pénétrée par le doigt 19,
- et une seconde encoche 21 de hauteur h' plus petite que la hauteur h de la première encoche 20 située à un écart angulaire A de celle-ci, par exemple de 90°, et qui est destinée également à être pénétrée par le doigt d'appui 19.

La butée intercalaire 7 comporte dans sa paroi cylindrique en arrière du doigt 19 deux fentes longitudinales 22 débouchant sur sa face opposée audit doigt, à 180° l'une de l'autre, le long desquelles peut se déplacer librement la goupille 5 (fig. 1) de guidage antirotation de la tige de mesure 2, et qui sont destinées à permettre l'entraînement en rotation de cette butée intercalaire par cette tige de mesure 2, sur toute leur longueur.

La butée intercalaire mobile 7 comporte une face d'entraînement 23 située en regard d'un épaulement 24 de la tige de mesure 2, la distance séparant ces deux éléments étant au plus égale à la course libre de la goupille 5 solidaire de la tige de mesure 2 le long des fentes 22; cette distance correspondant à la course de mesure le long de laquelle la touche de mesure 4 subit la seule pression de mesure du ressort 9, par l'intermédiaire du manchon 10.

A la fin de cette course de mesure, lorsque l'on pousse axialement la tige de mesure 2 dans la direction du corps 1, par saisie de la touche de mesure 4, l'épaulement 24 rencontre la face d'entraînement 23 de la butée intercalaire 7 et cette dernière, si l'on continue à pousser, libère son doigt 19 de l'encoche 20 ou 21 dans laquelle il est engagé, à l'encontre du ressort de poussée 8. A ce moment, par entraînement de la goupille 5 engagée dans les fentes 22 de la butée intercalaire 7, cette dernière peut être tournée, selon la flèche f de la fig. 2, autour de son axe longitudinal jusqu'à ce que son doigt 19 localise l'autre encoche 20 ou 21 et y pénètre sous la poussée du ressort 8, après relâchement de la tige de mesure 2.

La seule sensibilité tactile de l'opérateur suffit à cette localisation et l'opération de dégagement de la touche de mesure dans une position de retrait par les moyens décrits est rapide et simple, ce qui répond bien au but de l'invention.

Bien entendu, les hauteurs h et h' du système d'interpénétration à étages localisés de la butée intercalaire 7 et de l'extrémité 6 du palier 3 sont déterminées en fonction des positions de retrait désirées D et D' en avant du zéro (0) préréglé du transducteur de mesure, comme cela est indiqué sur la figure 1.

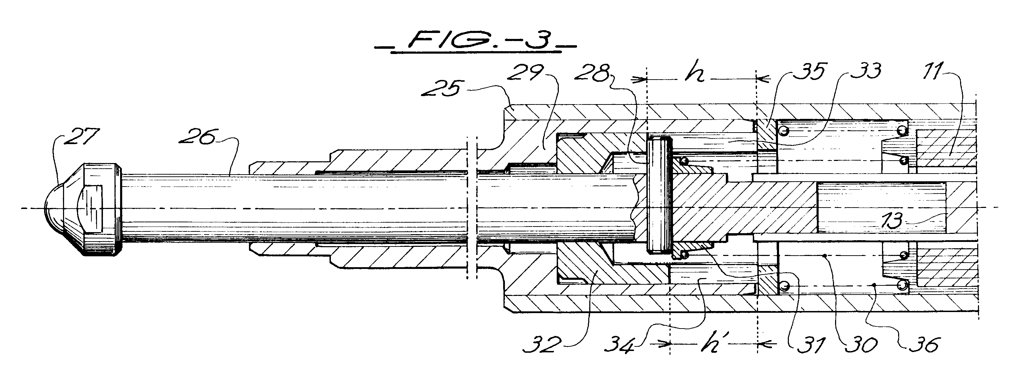

Le palpeur représenté figure 3 dans sa seconde forme d'exécution est également du type cylindrique à éléments coaxiaux dont le corps 25 est destiné à être fixé dans un support de mesure tel que par exemple un support pneumatique.

Ce palpeur comporte, disposés sensiblement de la même manière que dans la première forme d'exécution, les éléments suivants :
- une tige de mesure 26 équipée d'une touche de mesure 27,
- une pièce d'appui solidaire de la tige de mesure 26 constituée par une goupille 28 à traverser,
- une butée de fin de course 29 faisant ici partie de la structure du corps 25,
- un ressort 30 entre la tige de mesure 26 et le corps 25 prenant ici également appui sur la tige par l'intermédiaire d'un manchon 31, pour produire la pression de mesure, avec cependant la différence qu'ici ce manchon prend directement appui sur la goupille 28,
- un transducteur électronique de mesure comprenant les mêmes composants de mêmes fonctions que ceux du transducteur de la première forme d'exécution et dont ne sont visibles ici qu'une bobine 11 associée au corps 25 et le noyau de ferrite 13 associé à la tige de mesure 26.

Les moyens de réglage du positionnement de la touche de mesure par rapport au zéro électrique du transducteur électronique sont ici constitués par :
- une butée intercalaire 32 fixée au corps 25 entre la pièce d'appui 28 de la tige de mesure 26 et la butée de fin de course 29 associée au corps 25,
- deux encoches 33 et 34 de hauteurs respectives différentes h et h' dans la paroi cylindrique de la butée intercalaire 32, étendues dans la direction des déplacements de la tige de mesure 26 et espacées angulairement de 180°; ces encoches 33 et 34 étant destinées au coulissement et au guidage axial de la goupille 28 associée à la tige de mesure 26,
- une rondelle 35 pressée contre la butée intercalaire 32 en bout des deux encoches 33 et 34, par un second ressort 36, et destinée à s'opposer élastiquement au dégagement de la pièce d'appui 28 de la tige de mesure 26 hors de ces encoches.

Dans cette structure particulièrement simple, le ressort 30 fournissant la pression de mesure sert également à maintenir la pièce d'appui 28 de la tige de mesure 26 pressée contre le fond de l'une ou l'autre des deux encoches 33 et 34 de la butée intercalaire 32.

Dans cette seconde forme d'exécution, lorsque l'opérateur pousse axialement la tige de mesure 26 dans la direction du corps 25, à l'encontre du ressort 30, par saisie de la touche de mesure 27, la pièce d'appui constituée par la goupille 28 coulisse tout d'abord le long de l'encoche dans laquelle elle est engagée, ici l'encoche 33 de hauteur h, jusqu'à buter contre la rondelle 35.

Lorsque l'opérateur continue à pousser, la rondelle 35 cède élastiquement à l'encontre du second ressort 36 et la goupille 28 sort de l'encoche 33 dans laquelle elle était engagée. A ce moment cette goupille 28 peut être tournée par rotation de la tige de mesure 26 jusqu'à localisation de l'autre encoche 34 et introduite dans cette dernière sous la poussée combinée des deux ressorts 30 et 36, après relâchement de la tige de mesure 26, et enfin poussée par le seul ressort 30 jusqu'au fond de cette encoche 34 de hauteur h' différente de celle de l'autre encoche 33.

Les effets de positionnement sont ici les mêmes que dans la première forme d'exécution, mais cependant obtenus par des moyens plus simples.

Le principe de positionnement de la touche de mesure par rapport au zéro électrique du palpeur est évidemment applicable à tous types de palpeurs à tige de mesure mobile axialement.

Des variantes sont applicables sur le nombre de positions choisies de la touche de mesure par rapport au zéro électrique et les effets de l'invention sont obtenus dès le choix d'une seule de celles-ci.

Les moyens d'interpénétration de la première forme d'exécution peuvent être inversés en plaçant par exemple le doigt 19 en bout de l'extrémité 6 du palier 3 et la ou les encoches 20-21 dans la butée intercalaire 7.

De même une seule encoche 22 suffit dans cette première forme d'exécution à guider axialement la goupille 5 de la tige de mesure 2, auquel cas cette goupille ne sera en saillie que d'un seul côté.

## Revendications

1. Palpeur électronique de mesure de grandeurs linéaires comprenant un corps (1, 25) destiné à être fixé dans un support de mesure, une tige (2, 26) de mesure mobile axialement dans le corps (1, 25) dans la direction de la mesure sur une course limitée par un système de butées de fins de courses réglable comprenant une pièce d'appui (5, 28) solidaire de la tige (2, 26), une butée (6, 29) de fin de course associée au corps (1, 25) destinée à limiter la course de mesure, et un ressort (9, 30) entre la tige (2, 26) et le corps (1, 25) pour produire une pression de mesure, une touche (4, 27) de mesure fixée en bout de la tige (2, 26) a l'extérieur du corps (1, 25) un transducteur (11, 12, 13) électronique dans le corps (1, 25) sensible aux déplacements axiaux de la tige (2, 26) et apte à produire un signal électrique représentatif de la grandeur algébrique desdits déplacements par rapport à un zéro électrique préréglé, et des moyens de réglage du positionnement de la touche (4, 27) de mesure par rapport au zéro électrique, caractérisé en ce que le corps (1, 25) et la tige de mesure (2, 26) comportent des moyens d'interpénétration locale (19-20-21, 28-33-34) présentant au moins un étage d'appui de hauteur (h, h') prédéterminée dans la direction des déplacements de la tige, disposés entre la pièce d'appui (5, 28) de la tige (2, 26) et la butée (6, 29) associée au corps, ces moyens (19, 20, 21, 28, 33, 34) étant maintenus en appui par un ressort (8) supplémentaire ou par ledit ressort (30), l'interpénétration dans l'étage d'appui étant localisée par poussée manuelle à l'encontre du ressort (8, 30) et rotation de la tige (2, 26) autour de son axe longitudinal, et ensuite obtenue et assurée par relâchement, à la manière des liaisons dites "à baïonnette".

2. Palpeur selon la revendication 1, caractérisé en ce qu'il comporte une butée intercalaire (7) mobile disposée entre la pièce d'appui (5) de la tige de mesure (2) et la butée de fin de course (6) associée au corps (1), un ressort (8) pour pousser cette butée intercalaire contre la butée (6) de fin de course, et en ce que ces deux butées (7, 6) comportent des moyens d'interpénétration constitués par un doigt (19) en saillie sur une face de l'une d'elles (7) et une encoche (20; 21) correspondante sur la face en regard de l'autre, de hauteur (h; h') choisie.

3. Palpeur selon la revendication 1, caractérisé en ce qu'il comporte une butée intercalaire (7) mobile disposée entre la pièce d'appui (5) de la tige de mesure (2) et la butée de fin de course (6) associée au corps (1), un ressort (8) pour pousser cette butée intercalaire contre la butée de fin de course, et en ce que ces deux butées (7, 6) comportent des moyens d'interpénétration constitués par un doigt (19) en saillie sur une face de l'une d'elles (7) et au moins deux encoches (20, 21) correspondantes sur la face en regard de l'autre (6), ces deux encoches étant de hauteurs (h, h') différentes et espacées angulairement d'un angle choisi.

4. Palpeur selon la revendication 1, caractérisé en ce qu'il comporte une butée intercalaire (32) fixée au corps (25) entre la pièce d'appui (28) de la tige (26) et la butée de fin de course (29) associée au corps (25), des moyens d'interpénétration constitués par une encoche (33; 34) de la butée intercalaire (32), de hauteur (h; h') choisie, dans laquelle la pièce d'appui (28) de la tige (26) de mesure est destinée à coulisser, et une rondelle (35) pressée contre la butée intercalaire (32) par un ressort (36) et destinée à s'opposer élastiquement au dégagement de la pièce d'appui (28) de la tige (26) de mesure hors de l'encoche (33, 34) de la butée intercalaire, la pièce d'appui de la tige (26) de mesure étant par ailleurs pressée contre la butée intercalaire (32) par le ressort (30) destiné à produire la pression de mesure.

5. Palpeur selon la revendication 1, caractérisé en ce qu'il comporte une butée intercalaire (32) fixée au corps (25) entre la pièce d'appui (28) de la tige (26) et la butée de fin de course (29) associée au corps, des moyens d'interpénétration constitués par au moins deux encoches (33, 34) de la butée intercalaire (32) de hauteurs (h, h') différentes, espacées angulairement d'un angle choisi et dans l'une ou l'autre desquelles la pièce d'appui (28) de la tige de mesure (26) est destinée à coulisser, et une rondelle (35) pressée contre la butée intercalaire (32) par un ressort (36) et destinée à s'opposer élastiquement au dégagement de la pièce d'appui (28) de la tige de mesure (26) hors des encoches (33, 34) de la butée intercalaire (32), la pièce d'appui (28) de la tige de mesure (26) étant par ailleurs pressée contre la butée intercalaire (32) par le ressort (30) destiné à produire la pression de mesure.

## Claims

1. Electronic linear dimension measuring gauge comprising a body (1, 25) intended to be fixed in a measuring medium, a measuring rod (2, 26) which is axially movable in the body (1, 25) in the direction of measurement over a path limited by an adjustable system of end of path stops comprising a bearing member (5, 28) integral with the rod (2, 26), an end of path stop (6, 29) which is associated with the body (1, 25) and is intended to limit the path of measurement, and a spring (9, 30) between the rod (2, 26) and the body (1, 25) to produce a measuring pressure, a measuring tip (4, 27) fixed at the end of the rod (2, 26) at the exterior of the body (1, 25), an electronic transducer (11, 12, 13) in the body (1, 25) which is sensitive to the axial displacements of the rod (2, 26) and is capable of producing an electrical signal which is representative of the algebraic value of said displacements relative to a pre-adjusted electrical zero, and means for adjusting the positioning of the measuring tip (4, 27) relative to the electric zero, characterised in that the body (1, 25) and the measuring rod (2, 26) comprise means for local interpenetration (19-20-21, 28-33-34) having at least one bearing stage of which the height (h, h') is predetermined in the direction of the displacements of the rod, the interpenetration means being arranged between the bearing member (5, 28) of the rod (2, 26) and the stop (6, 29) associated with the body, these means (19, 20, 21, 28, 33, 34) being held in a bearing manner by an additional spring (8) or by said spring (30), the interpenetration in the bearing stage being located by a manual push against the spring (8, 30) and rotation of the rod (2, 26) round its longitudinal axis and then being obtained and ensured by release in the manner of so-called bayonet fittings.

2. Gauge according to claim 1, characterised in that it comprises a movable interposed stop (7) arranged between the bearing member (5) of the measuring rod (2) and the end of path stop (6) associated with the body (1), a spring (8) for pushing this interposed stop against the end of path stop (6), and in that these two stops (7, 6) comprise interpenetration means consisting of a finger (19) projecting over a face of one of them (7) and a corresponding notch (20; 21) on the opposing face of the other one of selected height (h; h').

3. Gauge according to claim 1, characterised in that it comprises a movable interposed stop (7) arranged between the bearing member (5) of the measuring rod (2) and the end of path stop (6) associated with the body (1), a spring (8) to push this interposed stop against the end of path stop, and in that these two stops (7, 6) comprise interpenetration means consisting of a finger (19) projecting over a face of one of them (7) and at least two corresponding notches (20, 21) on the face opposed to the other one (6), these two notches being of different heights (h, h') and being spaced angularly by a selected angle.

4. Gauge according to claim 1, characterised in that it comprises an interposed stop (32) fixed to the body (25) between the bearing member (28) of the rod (26) and the end of path stop (29) associated with the body (25), the interpenetration means consisting of a notch (33; 34) of the interposed stop (32) of selected height (h; h'), in which the bearing member (28) of the measuring rod (26) is intended to slide, and a washer (35) which is pressed against the interposed stop (32) by a spring (36) and is intended to oppose itself elastically to the release of the bearing member (28) of the measuring rod (26) from the notch (33, 34) of the interposed stop, the bearing member of the measuring rod (26) furthermore being pressed against the interposed stop (32) by the spring (30) intended to produce the measuring pressure.

5. Gauge according to claim 1, characterised in that it comprises an interposed stop (32) fixed to the body (25) between the bearing member (28) of the rod (26) and the end of path step (29) associated with the body, interpenetration means consisting of at least two notches (33, 34) of the interposed stop (32) of different heights (h, h') which are spaced angularly by a selected angle and in one or the other of which the bearing member (28) of the measuring rod (26) is intended to slide, and a washer (35) which is pressed against the interposed stop (32) by a spring (36) and is intended to oppose itself elastically to the release of the bearing member (28) of the measuring rod (26) from the notches (33, 34) of the interposed stop (32), the bearing member (28) of the measuring rod (26) furthermore being pressed against the interposed stop (32) by the spring (30) intended to produce the measuring pressure.

## Patentansprüche

1. Elektronischer Meßtaster für lineare Größen, mit einem Gehäuse (1,25), welches zur Befestigung an einer Meßhalterung vorgesehen ist, einem Meßstift (2,26), der axial in dem Gehäuse in Meßrichtung entlang eines Weges verschiebbar ist, der durch ein System von einstellbaren Endanschlägen begrenzt ist, welches System ein fest mit dem Messstift (2,26) verbundenes Anlageteil (5,28), einen dem Gehäuse (1,25) zugeordneten Endanschlag (6,29), der dem Begrenzen des Meßweges dient, und eine zwischen dem Meßstift (2,26) und dem Gehäuse (1,25) angeordnete Feder (9,30) zur Erzeugung einer Meßkraft umfaßt, weiterhin mit einer Meßspitze (4,27), die am Ende des Meßstiftes (2,26) außerhalb des Gehäuses (1,25) befestigt ist, einem elektronischen Meßwandler (11,12,13) im Gehäuse (1,25), der die axialen Verschiebungen des Meßstiftes (2,26) aufnimmt und zur Erzeugung eines elektrischen Signals geeignet ist, welches die algebraische Größe der genannten Verschiebungen bezüglich eines voreingestellten, elektrischen Nullpunkts repräsentiert, und mit Mitteln zur Einstellung der Positionierung der Meßspitze (4,27) bezüglich des elektronischen Nullpunkts, dadurch gekennzeichnet, daß das Gehäuse (1,25) und der Meßstift (2,26) örtlich ineinander eingreifende Mittel (19-20-21, 28,33,34) umfassen, welche mindestens eine Anlagestufe mit einer vorbestimmten Höhe (h,h') in Richtung der Verschiebungen des Meßstiftes aufweisen, welche Mittel zwischen dem Anlageteil (5,28) des Meßstiftes (2,26) und dem dem Gehäuse zugeordneten Anschlag (6,29) angeordnet sind, wobei diese Mittel (19,20,21,28,33,34) mittels einer zusätzlichen Feder (8) oder der genannten Feder (30) in Anlage gegeneinander gehalten sind, und wobei das Eingreifen in die Anlagestufe durch manuellen Druck entgegen der Feder (8,30) und Drehen des Meßstiftes (2,26) um seine Längsachse örtlich erzielt und anschließend durch Loslassen bewirkt und gesichert wird, in der Art eines "Bajonettverschlusses".

2. Meßtaster nach Anspruch 1, dadurch gekennzeichnet, daß er einen beweglichen Zwischenanschlag (7), der zwischen dem Anlageteil (5) des Meßstiftes (2) und dem dem Gehäuse (1) zugeordneten Endanschlag (6) angeordnet ist, und eine Feder (8) umfaßt, die den Zwischenanschlag (7) gegen den Endanschlag (6) drückt, und daß die beiden Anschläge (6,7) Eingriffsmittel aufweisen, die aus einem vorragenden Zapfen (19) an einer Fläche eines Anschlages (7) und einer korrespondierenden Kerbe (20;21) an der gegenüberliegenden Fläche des anderen Anschlages bestehen, welche die vorbestimmte Höhe (h;h') aufweist.

3. Meßtaster nach Anspruch 1, dadurch gekennzeichnet, daß er einen beweglichen Zwischenanschlag (7), der zwischen dem Anlageteil (5) des Meßstiftes (2) und dem dem Gehäuse (1) zugeordneten Endanschlag (6) angeordnet ist, und eine Feder (8) umfaßt, die den Zwischenanschlag (7) gegen den Endanschlag (6) drückt, und daß die beiden Anschläge (6,7) Eingriffsmittel aufweisen, die aus einem vorragenden Zapfen (19) an einer Fläche eines Anschlages (7) und mindestens zwei korrespondierenden Kerben (20;21) an der gegenüberliegenden Fläche des anderen Anschlages (6) bestehen, welche Kerben (20;21) unterschiedliche Höhen (h;h') und in Umfangsrichtung einen vorbestimmten Winkelabstand zueinander aufweisen.

4. Meßtaster nach Anspruch 1, dadurch gekennzeichnet, daß er einen Zwischenanschlag (32), der an dem Gehäuse (25) zwischen dem Anlageteil (28) des Meßstiftes (26) und dem dem Gehäuse (25) zugeordneten Endanschlag (29) befestigt ist, und Eingriffsmittel umfaßt, die aus einer Kerbe (33,34) des Zwischenanschlags (32) mit vorbestimmter Höhe (h;h'), in die das Anlageteil (28) des Meßstiftes (26) einschiebbar ist, und einer Ringscheibe (35) bestehen, die mittels einer Feder (36) gegen den Zwischenanschlag (32) gedrückt wird und dazu bestimmt ist, elastisch dem Heraustreten des Anlageteils (28) des Meßstifts (26) aus der Kerbe (33,34) des Zwischenanschlags (32) entgegenzuwirken, wobei das Anlageteil des Meßstifts (26) außerdem durch die Feder (30) zur Erzeugung der Meßkraft gegen den Zwischenanschlag (32) gedrückt wird.

5. Meßtaster nach Anspruch 1, dadurch gekennzeichnet, daß er einen Zwischenanschlag (32), der an dem Gehäuse (25) zwischen dem Anlageteil (28) des Meßstiftes (26) und dem dem Gehäuse zugeordneten Endanschlag (29) befestigt ist, und Eingriffsmittel umfaßt, die aus mindestens zwei Kerben (33,34) des Zwischenanschlags (32) mit verschiedenen Höhen (h,h'), die in Umfangsrichtung einen vorbestimmten Winkelabstand zueinander aufweisen, wobei in die eine oder die andere der Kerben das Anlageteil (28) des Meßstiftes (26) einschiebbar ist, und aus einer Ringscheibe (35) bestehen, welche mittels einer Feder (36) gegen den Zwischenanschlag (32) gedrückt wird und dazu bestimmt ist, elastisch dem Heraustreten des Anlageteils (28) des Meßstifts (26) aus den Kerben (33,34) des Zwischenanschlags (32) entgegenzuwirken, wobei das Anlageteil (28) des Meßstifts (26) außerdem durch die Feder (30) zur Erzeugung der Meßkraft gegen den Zwischenanschlag (32) gedrückt wird.
